Europäisches Patentamt

European Patent Office

Office européen des brevets

(11) Veröffentlichungsnummer: **0 068 224**
**A1**

## (12) EUROPÄISCHE PATENTANMELDUNG

(21) Anmeldenummer: 82105109.1

(22) Anmeldetag: 11.06.82

(51) Int. Cl.³: **B 21 B 45/02,** B 21 C 51/00,
G 01 K 7/36

(30) Priorität: 27.06.81 DE 3125315

(43) Veröffentlichungstag der Anmeldung: 05.01.83
Patentblatt 83/1

(84) Benannte Vertragsstaaten: FR GB IT

(71) Anmelder: Fried. Krupp Gesellschaft mit beschränkter
Haftung, Altendorfer Strasse 103, D-4300 Essen 1 (DE)

(72) Erfinder: Spies, Klaus, Hingberg Strasse 217,
D-4330 Mülheim (Ruhr) (DE)

(54) **Kühlverfahren.**

(57) Beim Kühlen von durchlaufendem walzwarmem Walzdraht durch ein aufgebrachtes Kühlmedium kühlt die Oberfläche des Drahtes immer stärker ab als das Drahtinnere. Um die bei einer Regelung der Kühlung in Abhängigkeit von der im Draht enthaltenen Wärmemenge bestehende Gefahr einer zu schwachen oder zu starken Kühlung und unerwünschten Gefügeänderung zu vermeiden, wird berührungslos die Oberflächentemperatur des Drahtes gemessen. Störeinflüsse durch Verunreinigung der Walzdrahtoberfläche oder Fremdmedien zwischen Draht und Meßstelle sollen dabei ausgeschaltet werden. Deshalb wird die Temperatur über den Wirbelstrom gemessen, der in einer den Draht umgebenden Sekundärspule (9) erzeugt wird, wenn eine den Draht (1) ebenfalls umgebende Primärspule (7, 8) mit einer hochfrequenten Wechselspannung ($U_1$) versorgt wird. Die von der Sekundärspule abgenommene Meßspannung ($U_2$) dient zur Regelung der Kühlmittelmenge, mit der der Draht beaufschlagt wird.

0068224

FRIED. KRUPP GESELLSCHAFT MIT BESCHRÄNKTER HAFTUNG
in Essen


Kühlverfahren


Die Erfindung bezieht sich auf ein Verfahren zum
Regeln der Kühlung eines durchlaufenden Walzdrahtes.

Bei bekannten Verfahren dieser Art werden zum Beispiel Pyrometer zur Messung der Walzdrahttemperatur nach dem Walzprozeß und zur Regelung der erforderlichen Kühlung verwendet. Da der Meßwert
von zwischen dem Draht und dem Pyrometer befindlichen Fremdmedien wie Kühlwasser, Wasserdampf
usw. beeinflußt wird, muß die Meßstelle mit Abstand hinter der Kühlstrecke angeordnet sein. Eine
Aufteilung der Kühlstrecke in einzelne durch Messung geregelte Kühlzonen ist deswegen nicht möglich.
Verunreinigungen der Walzdrahtoberfläche verfälschen zusätzlich das Meßergebnis.

Ein anderes Verfahren zur Messung der Walzdrahttemperatur ist aus der deutschen Patentschrift
1 452 345 bekannt. Hier wird jedoch nicht die
Temperatur der Walzdrahtoberfläche, sondern die
im Draht enthaltene Wärmemenge über die Wärmestrahlung gemessen, und zwar durch einen den
Draht umgebenden elektrischen Widerstand als

0068224

Meßgeber. Diese Messung hat den Nachteil, daß ein Meßwert für die Oberflächentemperatur nicht anfällt, so daß eine zu starke, das Drahtgefüge unerwünscht verändernde oder eine schwächere Kühlung als metallurgisch optimal nicht ausgeschlossen werden kann. Es ist Aufgabe der vorliegenden Erfindung, die Nachteile der bekannten Verfahren zu vermeiden und ein Kühlverfahren anzugeben, das die schnellstmögliche Erreichung einer bestimmten Oberflächentemperatur ohne zwischenzeitliche Unterkühlung gewährleistet.

Danach wird vorgeschlagen, daß die Oberflächentemperatur des Walzdrahtes berührungslos in der Weise gemessen wird, daß eine den Walzdraht umgebende Primärspule mit einer hochfrequenten Spannung versorgt wird, die über den Walzdraht in einer diesen ebenfalls umgebenden Sekundärspule eine von der Oberflächentemperatur des Walzdrahtes abhängige Meßspannung erzeugt und daß die Meßspannung zur Einstellung der Kühlmittelmenge verwendet wird, mit der der Walzdraht beaufschlagt wird. Dadurch wird erreicht, daß eine Messung der Oberflächentemperatur des Walzdrahtes erfolgt und diese zur Regelung der Kühlung herangezogen wird. Die Unabhängigkeit des Meßwertes von nichtmetallischen Verunreinigungen der Drahtoberfläche ermöglicht die Anordnung der Spulen in der Nähe der Kühlstellen. Die Kühlstrecke kann also in unmittelbar aufeinanderfolgende Kühlzonen aufgeteilt sein, deren jede mit einer der vorgesehenen Meßanordnungen versehen sein kann, so daß sich jede Kühlzone optimal regeln läßt. Zweckmäßig wird die Primärspule mit einer Speisespannung von 100 kHz versorgt. Je höher die Frequenz gewählt wird, desto

0068224

ausschließlicher geht die Temperatur der Oberfläche des Walzdrahtes in das Meßergebnis ein. Bei der angegebenen Frequenz ist eine Beeinflussung des Meßwertes durch die Drahttemperatur unterhalb der Oberfläche bereits praktisch vernachlässigbar.

In weiterer Ausgestaltung der Erfindung empfiehlt sich ihre Anwendung für die Kühlung von Stahldraht in der Weise, daß die Kühlmittelmenge, mit der der Walzdraht beaufschlagt wird, so eingestellt wird, daß die Walzdrahtoberfläche stärkstmöglich gekühlt wird, ohne daß eine Martensitbildung erfolgt. Wenn die Martensitbildung an der Drahtoberfläche verhindert wird, ist sie für das Drahtinnere mit Sicherheit auszuschließen, da hier die Temperatur immer höher liegt. Andererseits kann durch das neue Kühlverfahren die Kühlung der Oberfläche über den gesamten Bereich der Kühlstrecke sehr intensiv sein, so daß sich gegenüber herkömmlichen Kühlsystemen eine Verkürzung der Kühlstrecke ergibt.

Für eine besonders günstige Vorrichtung zur Durchführung des beschriebenen Kühlverfahrens wird vorgeschlagen, daß die Primärspule und die Sekundärspule in der Durchlaufrichtung des Walzdrahtes hintereinander angeordnet sind und daß die Sekundärspule über einen Temperaturregler mit Sollwert-Istwert-Vergleich und einen Wandler mit einem Wasserregelventil für den Kühlwasserzulauf verbunden ist. Die hochfrequente Spannung in der Primärspule erzeugt in der Sekundärspule einen Wirbelstrom, der proportional dem ohmschen Widerstand des Walzdrahtes an der Oberfläche ist und somit ein Maß für das jeweilige Drahtgefüge darstellt.

- 4 -

Nach einem weiteren Schritt der vorliegenden Erfindung besteht die Primärspule aus zwei Teilen, die vor und hinter der Sekundärspule angeordnet sind. Dadurch wird eine weitestgehend verlustfreie Erzeugung des Temperaturmeßwertes in der Sekundärspule erreicht.

In der Zeichnung ist ein Ausführungsbeispiel der erfindungsgemäßen Vorrichtung dargestellt, und zwar in

Fig. 1    in einem Übersichtsschema über eine Kühlzone der Kühlstrecke und in

Fig. 2    in einer Einzelwiedergabe des Meßgerätes.

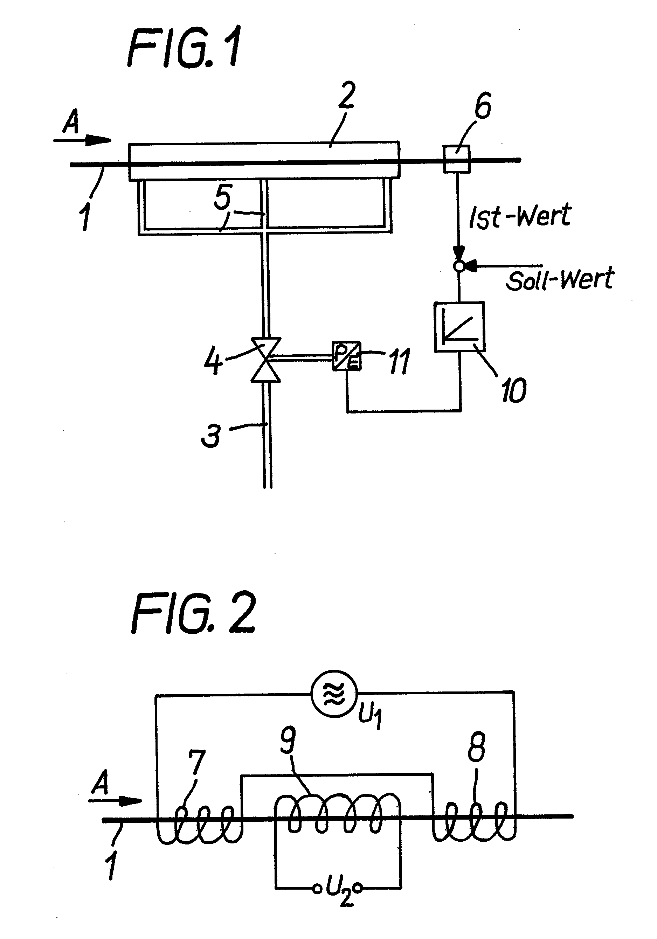

Der in Richtung des Pfeiles A durchlaufende Walzdraht 1 kommt aus einem nicht dargestellten Walzwerk und wird in einer Kühlstrecke aus der Walzhitze abgekühlt. In einer Kühlzone 2 wird er von einem Kühlmedium, zum Beispiel Wasser, beaufschlagt. Je nach dem Umfang der zu erreichenden Kühlung besteht die Kühlstrecke aus mehreren solcher Kühlzonen. Das Kühlmedium wird der Kühlzone 1 von einem Kühlwasserzulauf 3 über ein Wasserregelventil 4 und Verteilrohre 5 zugeführt. Anschließend an die Kühlzone 1 ist ein Meßgerät 6 angeordnet, das in Fig. 2 genauer dargestellt ist. Eine aus zwei Teilen 7 und 8 bestehende Primärspule umgibt den Walzdraht 1. Die Primärspule ist mit einer hochfrequenten Wechselspannung $U_1$ mit einer Frequenz von beispielsweise 100 kHz gespeist. Zwischen den beiden Teilen 7 und 8 der Primärspule liegt eine den Walzdraht 1 ebenfalls umgebende Sekundärspule 9.

0068224

Die in der Sekundärspule 9 induzierte Meßspannung $U_2$ wird als Istwert einem Temperaturregler 10 zugeführt und dort mit einem vorgegebenen Sollwert verglichen. Bei Abweichungen wird über einen elektropneumatischen Wandler 11 das Wasserregelventil 4 entsprechend betätigt.

## Patentansprüche

1. Verfahren zum Regeln der Kühlung eines durchlaufenden Walzdrahtes, d a d u r c h g e k e n n z e i c h n e t, daß die Oberflächentemperatur des Walzdrahtes (1) berührungslos in der Weise gemessen wird, daß eine den Walzdraht (1) umgebende Primärspule (7, 8) mit einer hochfrequenten Spannung ($U_1$) versorgt wird, die über den Walzdraht (1) in einer diesen ebenfalls umgebenden Sekundärspule (9) eine von der Oberflächentemperatur des Walzdrahtes (1) abhängige Meßspannung ($U_2$) erzeugt, und daß die Meßspannung ($U_2$) zur Einstellung der Kühlmittelmenge verwendet wird, mit der der Walzdraht (1) beaufschlagt wird.

2. Verfahren nach Anspruch 1, dadurch gekennzeichnet, daß die Spannung ($U_1$), mit der die Primärspule (7, 8) versorgt wird, eine Frequenz von etwa 100 kHz hat.

3. Verfahren nach Anspruch 1 zur Kühlung von Stahldraht, dadurch gekennzeichnet, daß die Kühlmittelmenge, mit der der Walzdraht beaufschlagt wird, so eingestellt wird, daß die Walzdrahtoberfläche stärkstmöglich gekühlt wird, ohne daß eine Martensitbildung erfolgt.

4. Vorrichtung zur Durchführung des Verfahrens nach einem der Ansprüche 1 bis 3, dadurch gekennzeichnet, daß die Primärspule (7, 8) und die Sekundärspule (9) in der Durchlaufrichtung des Walzdrahtes (1)

0068224

hintereinander angeordnet sind und daß die
Sekundärspule (9) über einen Temperaturregler (10) mit Sollwert-Istwert-Vergleich
und einen Wandler (11) mit einem Wasserregelventil (4) für den Kühlwasserzulauf
verbunden ist.

5. Vorrichtung nach Anspruch 4, dadurch gekennzeichnet, daß die Primärspule (7, 8) aus
   zwei Teilen besteht, die vor und hinter der
   Sekundärspule (9) angeordnet sind.

FIG.1

FIG. 2

Europäisches
Patentamt

**EUROPÄISCHER RECHERCHENBERICHT**

0068224
Nummer der Anmeldung

EP 82 10 5109.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | DE - C - 1 452 345 (KRUPP) -- | | B 21 B 45/02 |
| A | US - A - 4 144 741 (NAKAMOTO et al.) * Anspruch 1; Fig. 1 * -- | 1 | B 21 C 51/00 G 01 K 7/36 |
| A | DE - A - 2 414 015 (WEAN UNITED) * Ansprüche 1, 5; Seite 13, Absatz 1 * ---- | | |

RECHERCHIERTE SACHGEBIETE (Int. Cl. ³)

B 21 B 45/00
B 21 C 51/00
G 01 K 7/00

Der vorliegende Recherchenbericht wurde für alle Patentansprüche erstellt.

| Recherchenort | Abschlußdatum der Recherche | Prüfer |
|---|---|---|
| Berlin | 16-09-1982 | SCHLAITZ |